# EUROPEAN PATENT APPLICATION

(11) **EP 2 886 517 A1**
(43) Date of publication of application: **24.06.2015**
(21) Application number: 13829813.8
(22) Date of filing: 02.08.2013
(51) Int. Cl.: C02F 1/30, C02F 1/48, A01K 61/00

(54) **STERILIZATION SYSTEM FOR AQUACULTURE**

(30) Priority: 14.08.2012 CN 201210289626
(71) Applicant: STP Co., Ltd., Suzhou Jiangsu 215000 (CN)
(72) Inventor: VIALA, Roar, N-3261 Larvik (NO); WENDEL, Frederik, N-4842 Arendal (NO); YU, Wenhao, Atlanta Georgia 30350 (US)
(74) Representative: Ran, Handong
(86) International application number: PCT/CN2013/080719
(87) International publication number: WO 2014/026551

(57) **Abstract**

A sterilization system for aquaculture comprises an inducing light source, a water pump, and at least one sterilization device. The inducing light source is disposed around a water inlet of the water pump. A water outlet of the water pump is in communication with an inlet of the sterilization device. An outlet of the sterilization device is in communication with a water body. By means of the biological phototaxis, microorganism enrichment in a culture system is implemented. Sterilization is performed by using an ionization method, an ultraviolet method, or a high voltage pulse electric field method, so as to ensure the high efficiency of sterilization, and simultaneously reduce an impact on an aquaculture environment as much as possible, thereby ensuring the production and quality of aquatic products.

## Description

### TECHNICAL FIELD

The present invention belongs to the field of aquaculture and particularly relates to a sterilization system of aquaculture.

### BACKGROUND ART

There are a large number of microorganisms in the water body for aquaculture. The massive growth and reproduction of these microorganisms would cause an occurrence or prevalence of disease of the aquatic animals.

The traditional sterilization methods for water body generally comprise:
1) Disinfectant sterilization. However, this disinfectant has biotoxicity, which may generate residual within the aquatic product and would cause harm to human health;
2) Ozone sterilization. It is necessary to provide an ozone generator and ensure a certain concentration of ozone in the entire water body, which is not cost-effective and may impact the overall aquaculture environment;
3) Ultraviolet radiation sterilization. The ultraviolet rays have a narrow coverage and a low efficiency.

In the process of aquaculture, the microorganisms are dispersed over the water body with a wide range and a small distribution density. The present sterilization method can only effectively sterilize after exerting an impact on the overall aquaculture environment, thus it has low sterilization efficiency and a high deleteriousness.

### SUMMARY

The invention provides a sterilization system of the aquaculture to solve the defects existed in the above sterilization method, such as low sterilization efficiency and high deleteriousness.

To this end, the sterilization system of the aquaculture of the invention comprises an inducing light source, a water pump and at least one sterilization device. The inducing light source is arranged around a water inlet of the water pump. A water outlet of the water pump is in communication with an inlet of the sterilization device. An outlet of the sterilization device is in communication with a water body. The inducing light source attracts the microorganisms to crowd in the vicinity of the water inlet of the water bump; the water pump guides the water enriched with the microorganisms into the sterilization device, and the sterilization device sterilizes the water and then pours it back into water body for aquaculture.

Furthermore, the inducing light source has a brightness range from 20∼1001m.

In particular, the inducing light source is a LED light which has following characters: usage of low-voltage power supply, low power consumption, small size, adaptability for volatile environment, high stability, and variable colors such as red, yellow, green ,blue, and orange under different current so as to specifically attract the microorganisms.

Advantageously, the linear distance between the inducing light source and the water inlet of the water pump is 0.3∼1m.

Advantageously, the water pump has a flow of 1000 - 4000 gallon/hour.

In particular, the sterilization method performed by the sterilization device is a physical sterilization, such as ionization method, ultraviolet method, and high voltage pulse electric field method.

The principle of the ionization method is that of applying a voltage on two close metals, generating a current when the water flowing through the space between the two close metals, and releasing positive ions by the metal, which ions move from one metal to another metal in the water under an electric field. Generally, the generation rate of the positive ions is 0.15∼0.4ppm, the concentration of the positive ions in the water depends on the water flow between the metals. More positive ions would be generated with the increase of the voltage. The positive ions in the water are in a free state and always seek for negative substances in the water, such as bacteria and parasites. Since the bacteria and parasites have surface membranes negatively charged, the positive ions in the water can be readily trapped in the surface membranes of the microorganisms. While, the surface membranes of the microorganisms trapping the positive ions may have a so weak penetrability that the microorganisms cannot normally absorb nutrient and thus die.

The ultraviolet method is an easily operated sterilization method which has following characters: no drug residue, high efficiency, high velocity, reflexible by difference surface. When the artificial ultraviolet with a wavelength of 253.7nm is significantly absorbed, the genetic material (DNA) of the bacteria and viral nucleic acid may be damaged and drastic chemical changes happening in the molecules disenable the reproduction. The most significant change is a formation of dimer by pyrimidine-base in the molecule of nucleic acid. Currently, the main lethal of the ultraviolet is a generation of pyrimidine dimer. In addition, the light hydration reaction caused by the ultraviolet in the nucleic acid and the light bridging reaction caused by the interaction between the nucleic acid and the protein may have certain affections. Considering that the nucleic acid is a life essence undertaking the life genetic and all vital functions, it is not beneficial for the extension of life once the nucleic acid is changed or damaged, so the ultraviolet can effectively sterilize the bacteria and the virus in the water.

The principle of the high voltage pulse electric field sterilization method is that of guiding the water passing through the instant high voltage electric field generated by two electrodes, changing the penetrability of the cell membrane of the bacteria through the damage to the cell membrane caused by HEEP pulse, and killing the cell. The high voltage electric field can be achieved by two approaches. One of these approaches is a utilization of LC oscillating circuit comprising charging a set of capacitors by use of high voltage supply in advance, connecting the capacitors with the electrodes of the inductance coil and the process chamber, and exerting high frequency index pulse attenuating waves generated during the discharging of the capacitors onto the two electrodes to form a high voltage pulse electric field; since the LC circuit discharges fast and it can release the field energy within tens or hundreds of microseconds, it can successively charge and discharge the LC oscillating circuit by use of an automatic control device and complete the sterilization within tens of milliseconds. The other of these approaches is a generation of a continuous high voltage pulse electric field by use of a specific high frequency high voltage transformer.

Advantageously, the sterilization device comprises a housing, a sterilization generator within the housing, water flow channels within the housing, and an inner insulation cap positioned between the passageway of circuits of the sterilization generator and the flow channels. The inner insulation cap is used for blocking the water into the passageway of circuits, avoiding the failure of the circuits or electric leakage. The sterilization generator can sterilize during the passing of the water flow through the flow channels.

Advantageously, the sterilization device further comprises an outer insulation cap positioned at the end of the housing. This outer insulation cap is used for holding the sterilization device during installation and debugging, avoiding the electric leakage from the metal housing.

Preferably, the sterilization generator is an ozone generator, a high voltage pulse generator or an ultraviolet generator.

Preferably, the distribution density of the sterilization system is 1∼2 sterilization system per 1000 m³.

By means of the biological phototaxis, microorganism enrichment in a culture system is implemented. Sterilization is performed by using an ionization method, an ultraviolet method, or a high voltage pulse electric field method, so as to ensure the high efficiency of sterilization, and simultaneously reduce an impact on an aquaculture environment as much as possible, thereby ensuring the production and quality of aquatic products.

### DESCRIPTION OF FIGURES

Figure 1 is a cross-section view of an ionization sterilization device according to a first embodiment of the present invention.
Figure 2 is a cross-section view of a high voltage pulse electric field sterilization device according to a second embodiment of the present invention.
Figure 3 is a cross-section view of an ultraviolet sterilization device according to a third embodiment of the present invention.
Figure 4 is a structural diagram view of a sterilization system of aquaculture according to a fourth embodiment of the present invention.

### SPECIFIC EMBODIMENTS

The present invention would be further explained in details with reference to the following embodiments. It shall be understood that the person skilled in the art can make equivalent changes or modifications on the present invention after reading the contents disclosed, which shall also fall into the protection scope of the present invention.

### First Embodiment

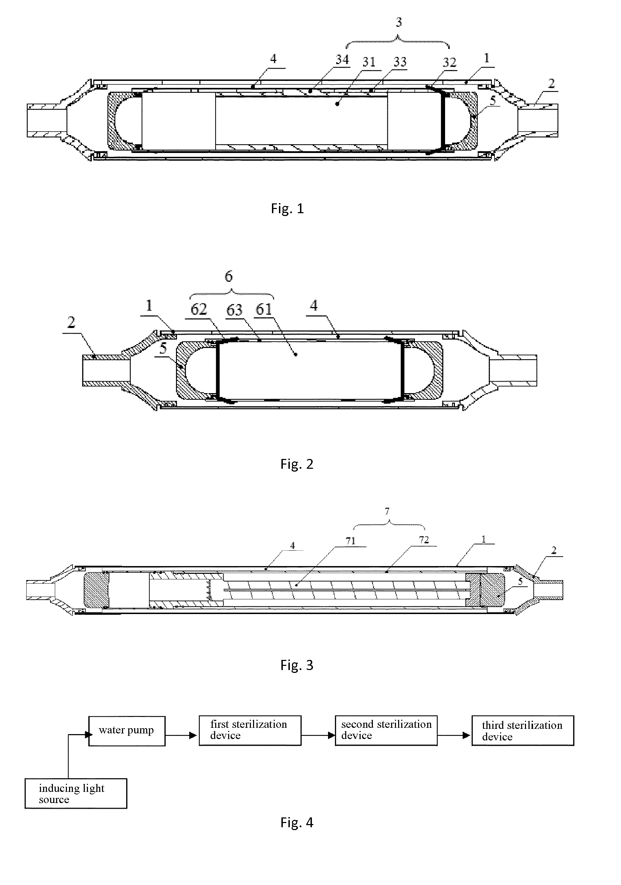

Please see figure 1, an ionization sterilization device of the invention comprises a housing 1 made of stainless steel, an outer insulation cap 2 in an infundibulate shape positioned at two ends of the housing 1, an ozone generator 3 positioned in the center of the housing 1, a flow channel 4 and an inner insulation cap 5.

The ozone generator 3 comprises a passageway 31 of circuits, an electric-connection spring 32, an inner stainless steel tube 33 and an ionization material 34, wherein, the flow channel 4 is positioned between the housing 1 and the inner stainless steel tube 33, the cavity of the inner stainless steel tube 33 forms the passageway 31 of circuits for receiving the lead wires of the power controller or external controller, the passageway 31 of circuits is blocked at its two ends by the inner insulation cap 5 to be separated with the flow channel 4, the ionization material 34 is embedded in the inner stainless steel tube 33, and the outer wall of the inner stainless steel tube 33 is connected to the positive electrode of the power source via the electric-connection spring 32. After turn on the device, a voltage can be formed between the ionization material 34 and the housing 1, and the ionization material 34 can release sterilization ions when the water passing into the flow channel 4 through the outer insulation cap 2 at one end, so as to kill the microorganisms in the water body, the water finally flows out from the outer insulation cap 2 at the other end.

### Second Embodiment

Please refer to figure 2, a high voltage pulse electric field sterilization device with a similar structure as that disclosed in the first embodiment is provided, wherein the ozone generator 3 is replaced by a high voltage pulse generator 6. The high voltage pulse generator 6 generates a high voltage pulse electric field with an electric field intensity of 15kv/cm∼100 kv/cm and has a pulse frequency of 1kHz∼100kHz and a discharge frequency of 1kHz∼20kHz.

The high voltage pulse generator 6 comprises a passageway 61 of circuits, an electric-connection spring 62 and an inner stainless steel tube 63, wherein, the flow channel 4 is positioned between the housing 1 and the inner stainless steel tube 63, the cavity of the inner stainless steel tube 63 forms the passageway 61 of circuits for receiving the lead wires of the power controller or external controller, the passageway 61 of circuits is blocked at its two ends by the inner insulation cap 5 to be separated with the flow channel 4, and the outer wall of the inner stainless steel tube 63 is connected to the positive electrode of the power source via the electric-connection spring 62. After turn on the device, a pulse voltage can be formed between the inner stainless steel tube 63 and the housing 1, and the high voltage pulse electric field can be generated between the inner stainless steel tube 63 and the housing 1 when the water passing into the flow channel 4 through the outer insulation cap 2 at one end, so as to kill the microorganisms in the water body, the water finally flows out from the outer insulation cap 2 at the other end.

### Third Embodiment

See figure 3, an ultraviolet sterilization device with a similar structure as that disclosed in the first embodiment is provided, wherein the ozone generator 3 is replaced by an ultraviolet generator 7.

The ultraviolet generator 7 comprises a UV lamp 71 and a nonopaque tube 72, the flow channel 4 is positioned between the housing 1 and the nonopaque tube 72, the UV lamp 71 is arranged in the nonopaque tube 72, the nonopaque tube 7 is sealed at its two ends by the inner insulation cap 5, the UV light emitted by the UV lamp 71 penetrates through the nonopaque tube 72 and kills the microorganisms in the water passing through the flow channel 4.

The nonopaque tube 72 can be made of glass or transparent resin.

### Fourth Embodiment

Figure 4 shows a sterilization system of aquaculture comprising an inducing light source, a water pump and a first, second and third sterilization devices. The inducing light source is a LED light with a brightness 0f 80 lm which is arranged at a distance of 0.5m from the water inlet of the water pump. The water outlet of the water pump is in communication with an inlet of the first sterilization device. After these three sterilization devices are connected in series, the water can flow out from the outlet of the third sterilization device. The sterilization process is shown in figure 4, wherein the water pump has a flow of 2500 gallon/hour.

Please note that the above first, second and third sterilization devices can be selected from those disclosed in the first to third embodiments, and that these three sterilization devices can be connected in parallel.

In case of parallel connection, the water can simultaneously flow through a plurality of sterilization devices.

In case of series connection, the water can flow through a plurality of sterilization devices in proper order.

The LED light attracts the microorganisms to crowd in the vicinity of the water inlet of the water bump; the water pump guides the water enriched with the microorganisms into the sterilization devices, and the sterilization devices sterilize the water and then pour it back into water body for aquaculture.

For a water body of aquaculture with a volume of 1200 m³, it can be provided with one above sterilization system to implement the clean of the water body.

## Claims

1. A sterilization system for aquaculture comprising an inducing light source, a water pump and at least one sterilization device, wherein the inducing light source is arranged around a water inlet of the water pump, a water outlet of the water pump is in communication with an inlet of the sterilization device, an outlet of the sterilization device is in communication with a water body.

2. The sterilization system according to claim 1, wherein the inducing light source has a brightness range of 20∼100 lm.

3. The sterilization system according to claim 1, wherein a linear distance between the inducing light source and the water inlet of the water pump is 0.1∼1 m.

4. The sterilization system according to claim 1, wherein the water pump has a flow rate greater than 1000 gallon/hour.

5. The sterilization system according to claim 1, comprising 2∼5 sterilization devices.

6. The sterilization system according to claim 5, wherein the 2∼5 sterilization devices are connected in parallel or in series.

7. The sterilization system according to any one of claims 1-6, wherein the sterilization device comprises a housing, a sterilization generator within the housing, water flow channels within the housing, and an inner insulation cap positioned between a passageway of circuits of the sterilization generator and the flow channels.

8. The sterilization system according to claim 7, wherein the sterilization generator is an ozone generator, a high voltage pulse generator or an ultraviolet generator.

9. The sterilization system according to claim 7, further comprising an outer insulation cap positioned at the end of the housing.
